# EUROPÄISCHE PATENTANMELDUNG

(11) **EP 2 233 753 A2**
(43) Veröffentlichungstag der Anmeldung: **29.09.2010**
(21) Anmeldenummer: 10155272.7
(22) Anmeldetag: 03.03.2010
(51) Int. Cl.: F16B 13/14

(54) **Anschlussvorrichtung und Verfahren zur Erstellung eines Anschlusses**

(30) Priorität: 23.03.2009 DE 102009001749
(71) Anmelder: HILTI Aktiengesellschaft, 9494 Schaan (LI)
(72) Erfinder: Bahr, Oliver, 9000 St. Gallen (CH); Claus, Alexander, 6800 Feldkirch (AT); Vedder, Joachim, 88138 Hergensweiler (DE)

(57) **Zusammenfassung**

Eine Anschlussvorrichtung (21) zum kraftschlüssigen Verbinden eines ersten Bauteils (11) mit einem zweiten Bauteil (16) umfasst einen einen Hohlraum (23) ausbildenden Hohlkörper (22) mit einer Einführöffnung (24) zum Einführen eines Verbindungselementes (36). Im Hohlraum (23) des Hohlkörpers (22) ist ein Verankerungsmittel (31) zum Verankern des in den Hohlraum (23) eingeführten Verbindungselementes (36) vorgesehen, wobei das Verankerungsmittel (31) und der Hohlkörper (22) zusammen eine vorkonfektionierte Einheit ausbilden. Weiter betrifft die Erfindung ein Verfahren zur Erstellung eines Anschlusses mit einer derartigen Anschlussvorrichtung.

## Beschreibung

Die Erfindung betrifft eine Anschlussvorrichtung zum kraftschlüssigen Verbinden eines ersten Bauteils mit einem zweiten Bauteil, der im Oberbegriff des Patentanspruchs 1 genannten Art. Weiter betrifft die Erfindung ein Verfahren zur Erstellung eines Anschlusses.

Gegossene Bauteile, wie Wände, Decken und dergleichen aus Beton, werden zur Aufnahme von Zugkräften mit Bewehrungen versehen. Aufgrund des Bauablaufs oder der Grösse dieser Bauteile können diese oftmals nicht in einem Guss beziehungsweise monolithisch erstellt werden. In solchen Fällen werden Arbeitsfugen, wie Betonierfugen vorgesehen, so dass zuerst ein erstes Bauteil und anschliessend, zu einem späteren Zeitpunkt das an das erste Bauteil anschliessende zweite Bauteil erstellt wird. Dabei muss sichergestellt werden, dass über diese Trennfuge alle auf das Gesamtbauteil einwirkenden Kräfte übertragbar sind.

Zur Schaffung einer kraftschlüssigen Verbindung zwischen den beiden Bauteilen sind so genannte Übergreifstösse bekannt, bei denen Bewehrungseisen des ersten Bauteils durch die Abschalung der Betonierfuge mit der erforderlichen Verankerungslänge herausragen.

Nachteilig an der bekannten Lösung ist, dass die Durchführöffnungen für die Bewehrungseisen in der Abschalung sorgfältig abgedichtet werden müssen, da ansonsten Zementmilch, welche von Wasser und Feinanteilen des noch flüssigen Betons gebildet ist, durch diese Durchführöffnungen austreten kann. Fehlt in einem Bereich, z. B. bei der Abschalung diese Zementmilch, entstehen so genannte Kiesnester, welche einen Bereich des Bauteils mit verminderter Tragfähigkeit bilden und zudem ästhetisch unerwünscht sind. Des Weiteren bilden die aus der Abschalung herausragenden Bewehrungseisen ein Gefährdungspotenzial für den Anwender und schränken gegebenenfalls den weiteren Bauablauf ein.

Aus der DE 296 14 733 U1 ist eine Anschlussvorrichtung zum kraftschlüssigen Verbinden eines ersten Bauteils mit einem zweiten Bauteil bekannt, die einen einen Hohlraum ausbildenden Hohlkörper mit einer Einführöffnung zum Einführen eines stabförmigen Verbindungselementes, wie ein Bewehrungseisen, umfasst. Der hülsenförmige Hohlkörper wird so an der Schalung des ersten Bauteils angeordnet, dass seine Einführöffnung etwa in der Ebene der Oberfläche des erstellten ersten Bauteils zu liegen kommt. Zur Erstellung des Anschlusses wird zunächst der Hohlraum des Hohlkörpers mit einer aushärtbaren Masse, z. B. mit Zementmörtel, als Verankerungsmittel befüllt und anschliessend ein Bewehrungseisen als Verbindungselement in diesen eingeführt. Nach dem Aushärten der aushärtbaren Masse ist das Verbindungselement kraftschlüssig in dem ersten Bauteil verankert und somit das anschliessend erstellte zweite Bauteil über diese kraftschlüssige Verbindung zur Übertragung der einwirkenden Kräfte mit dem ersten Bauteil verbunden.

Nachteilig an der bekannten Lösung ist, dass die aushärtbare Masse separat mitgeführt und am Anwendungsort appliziert werden muss. Dies stellt einen Mehraufwand zur Erstellung des Anschlusses sowie einen zusätzlichen logistischen Aufwand dar.

Aufgabe der Erfindung ist es, eine Anschlussvorrichtung zum kraftschlüssigen Verbinden eines ersten Bauteils mit einem zweiten Bauteil sowie ein Verfahren zur Erstellung eines Anschlusses zu schaffen, die beziehungsweise das ein einfaches Erstellen eines Anschlusses ermöglicht und die vorgenannten Nachteile vermeidet.

Die Aufgabe ist durch die Merkmale der unabhängigen Ansprüche gelöst. Vorteilhafte Weiterbildungen sind in den Unteransprüchen dargelegt.

Gemäss der Erfindung ist im Hohlraum des Hohlkörpers zumindest bereichsweise ein Verankerungsmittel zum Verankern des in den Hohlraum einführbaren Verbindungselementes vorgesehen, wobei das Verankerungsmittel und der Hohlkörper zusammen eine vorkonfektionierte Einheit ausbilden.

Die Anschlussvorrichtung bildet einen im Wesentlichen geschlossenen, als eine Einheit montierbaren Behälter. Das Verankerungsmittel ist vor der Anordnung der Anschlussvorrichtung z. B. an einer Schalung des ersten Bauteils im Hohlkörper vorhanden. Der Anwender muss nicht ein separates Verankerungsmittel mitführen und dieses in einem zusätzlichen Arbeitsschritt in dem Hohlkörper anordnen. Das in den Hohlkörper einführbare Verbindungselement ist beziehungsweise wird direkt in dem in dem ersten Bauteil eingegossenen Hohlkörper verankert. Der Aufwand zur Erstellung des Anschluss reduziert sich gegenüber den herkömmlichen Lösungen massgeblich. Zudem können entsprechend der Innenabmessung des Hohlraums alle üblichen Durchmesser von Verbindungselementen, insbesondere von Bewehrungseisen, verwendet werden, da diese nach der Anordnung im ersten Bauteil nicht mehr in die gewünschte Ausrichtung gebogen werden müssen. Da bis zum Erstellen des zweiten Bauteils keine Bewehrungseisen aus dem ersten Bauteil herausragen, wird der Bauablauf durch den Anschluss in keiner Form behindert. Des Weiteren ist ein in den Hohlkörper eingeführtes Verbindungselement zumindest bis zu einem gewissen Grad ausrichtbar.

Aufgrund der klar definierbaren Verankerungskräfte kann zudem die Verankerungslänge des Verbindungselementes im ersten Bauteil gegenüber z. B. einer nachträglich gebohrten Lösung wesentlich reduziert werden, was die erforderliche Materialmenge und Kosten für die einzelnen Teile der Anschlussvorrichtung und des mit diesem zur Anwendung gelangenden Verbindungselementes senkt. Die Geometrie und insbesondere die axiale Länge des Hohlkörpers werden entsprechend der zu übertragenden Kräfte definiert. Bei einer Arbeitsfuge, über die z. B. hauptsächlich Schubkräfte übertragen werden, kann die axiale Länge des Hohlkörpers kürzer als bei einer Arbeitsfuge ausgebildet sein, über die z. B. hauptsächlich Zugkräfte übertragen werden müssen.

Unter dem Begriff Verbindungselemente werden in diesem Zusammenhang neben Bewehrungseisen alle anderen Arten von Elementen verstanden, die zur Schaffung einer kraftschlüssigen Verbindung zwischen dem ersten Bauteil und dem zweiten Bauteil geeignet sind. Neben nachträglich hergestellten Bauteilen kann das zweite Bauteil auch ein Träger oder eine Maschine sein, welche mittels des Verbindungselements kraftschlüssig mit dem ersten Bauteil verbunden wird. Beispielsweise werden als Verbindungselemente Gewindestangen oder Kopfbolzen verwendet. Vorteilhaft ist das Verbindungselement stabförmig. Weiter kann das Verbindungselement mit einem Anschlussabschnitt, wie ein Schraubgewinde oder Kupplungseinrichtung, an seinem freien Ende versehen sein, an welchem ein zusätzliches Element, z. B. ein abgebogenes Bewehrungseisen oder eine Verankerungsplatte anschliessbar ist. Weiter kann beispielsweise ein verankertes Verbindungselement auch zum Anschluss von Bügelelementen oder Bewehrungskörben dienen, welche im zweiten Bauteil eingebettet werden. Neben metallischen Verbindungselementen können auch Verbindungselemente aus nicht-metallischen Materialien, wie Kunststoff, zur Anwendung gelangen.

Die erfindungsgemässe Anschlussvorrichtung ist beispielsweise für Wand-Wand-, Wand-Decke-, Decke-Decke- oder Pfeiler-Decke-Verbindungen, aber auch für nachträglich zu schliessende Öffnungen verwendbar, wobei die genannten Beispiele nicht abschliessend sind. Somit ist die Anschlussvorrichtung für alle Arten von Verbindungen von zwei in einem zeitlichen Abstand zueinander erstellbaren Bauteilen geeignet. Neben gegossenen Bauteilen, z. B. aus Beton, kann die erfindungsgemässe Anschlussvorrichtung auch bei gemauerten Bauteilen vorgesehen werden. Dazu wird der Hohlkörper mit dem Verankerungsmittel bei der Erstellung des ersten Bauteils mit eingemauert oder in diesem eingegossen. Vor dem Erstellen des sich an das erste Bauteil anschliessenden, zweiten Bauteils wird dann das entsprechend geeignete Verbindungselement, z. B. eine Mauerwerksbewehrung, in der Anschlussvorrichtung verankert und dann das zweite Bauteil beispielsweise durch Mauern oder Giessen erstellt.

Vorzugsweise umfasst das Verankerungsmittel eine aushärtbare Masse, welche nach dem Aushärten eine vorteilhafte kraftschlüssige Verankerung des in den Hohlkörper eingeführten Verbindungselementes gewährleistet. Die Aushärtung der aushärtbaren Masse wird beispielsweise durch von aussen einwirkende Einflüsse, wie z. B. durch Zutritt von Luft, Wasser, usw., oder durch eine aufgebrachte Strahlung, wie z. B. durch Wärme, UV-Licht, usw., initiiert beziehungsweise veranlasst.

Bevorzugt umfasst die aushärtbare Masse mehrere Komponenten, welche vorteilhaft beim Einführen des Verbindungselementes vermischt werden, wobei der Aushärtvorgang der aushärtbaren Masse beispielsweise dabei gestartet wird. Diese Anschlussvorrichtung zeichnet sich durch eine hohe und zeitlich lange Lagerstabilität aus. Die einzelnen Komponenten sind beispielsweise in einer entsprechenden Anzahl von Behältnissen in dem Hohlraum des Hohlkörpers angeordnet. Beispielsweise ist zumindest eine der Komponenten, vorteilhaft die Komponente, welche den Aushärtprozess der aushärtbaren Masse startet, mikroverkapselt in der zumindest einen weiteren Komponente vorgesehen. In einer vorteilhaften Variante ist z. B. das Behältnis mit der ersten Komponente direkt im Behältnis mit der anderen Komponente angeordnet. Beispielsweise weist das in den Hohlraum einführbare Verbindungselement an seinem Einführende ein Mischelement zum Vermischen der Komponenten der aushärtbaren Masse auf, so dass beim Einführen des Verbindungselementes eine ausreichende und vorteilhaft homogene Vermischung der Komponenten erfolgt.

Vorzugsweise ist ein Mischelement zum Durchmischen der aushärtbaren Masse im Hohlraum des Hohlkörpers angeordnet. Das Mischelement gewährleistet eine Durchmischung der aushärtbaren Masse und stellt somit sicher, dass nach dem Aushärten derselben hohe Verankerungswerte des im Hohlkörper eingeführten Verbindungselementes erreicht werden. Insbesondere bei einer mehrere Komponenten umfassenden aushärtbaren Masse als Verankerungsmittel ist die Anordnung eines Mischelementes vorteilhaft.

Bevorzugt ist das Mischelement verschiebbar im Hohlraum des Hohlkörpers angeordnet, welches beispielsweise beim Einführen des Verbindungselementes in den Hohlraum verschoben wird und dabei die aushärtbare Masse durchmischt. Vorteilhaft ist das Mischelement zwischen der Einführöffnung und der aushärtbaren Masse im Hohlraum des Hohlkörpers angeordnet.

Vorzugsweise ist die Einführöffnung mit einem Verschlusselement verschlossen, welches beim Erstellen des ersten Bauteils ein Eindringen beispielsweise von Zementmilch in den Hohlraum des Hohlkörpers verhindert. Zudem schützt das Verschlusselement das in dem Hohlraum des Hohlkörpers angeordnete Verankerungsmittel vor äusseren Einflüssen.

Vorteilhaft ist das Verschlusselement eine von dem Verbindungselement durchstossbare Membrane, welche ein einfaches Einführen des Verbindungselementes in den verschlossenen Hohlkörper ermöglicht.

Bevorzugt ist ein Positionierelement für die Positionierung und Anordnung des Hohlkörpers im ersten Bauteil vorgesehen, wobei das Positionierelement beabstandet zur Einführöffnung des Hohlkörpers an diesem aussenseitig angeordnet ist. Das Positionierelement ist beispielsweise mit einem Bewehrungseisen des ersten Bauteils oder einem Abschnitt des ersten Bauteils der Schalung in Anlage bringbar und ermöglicht eine sichere Fixierung des Hohlkörpers im ersten Bauteil, womit dieser gegen eine unbeabsichtliche Verschiebung während dem Erstellen, z. B. Giessen des ersten Bauteils gesichert und korrekt ausgerichtet ist. Beispielsweise umfasst das Positionierelement zumindest ein am Umfang angeordneten, von diesem radial abragenden Materialabschnitt. Besonders vorteilhaft ist das Stützelement als umfänglich umlaufender Ring ausgebildet.

Vorzugsweise sind mehrere Hohlkörper an einem Trägerelement angeordnet, womit gleichzeitig mehrere Punkte zum Erstellen einer kraftschlüssigen Verankerung mehrerer Verbindungselemente zur Verfügung stehen. Das Trägerelement selbst kann hierbei z. B. eine stirnseitige Abschalung des ersten Bauteils ausbilden.

Bevorzugt ist zwischen den Hohlkörpern ein Fugenabdichtelement vorgesehen, welche die Arbeitsfuge, z. B. eine Betonierfuge, gegen eindringendes Wasser abdichtet. Das Fugenabdichtelement ist vorteilhaft ein handelsübliches Fugenband und erstreckt sich weiter vorteilhaft über die gesamte Längserstreckung der Arbeitsfuge beziehungsweise des Trägerelementes.

Das erfindungsgemässe Verfahren zur Erstellung eines Anschlusses zum kraftschlüssigen Verbinden eines ersten Bauteils mit einem zweiten Bauteil ist gekennzeichnet durch eine Anschlussvorrichtung mit einem einen Hohlraum ausbildenden Hohlkörper, der eine Einführöffnung zum Einführen eines stabförmigen Verbindungselementes aufweist und der in seinem Hohlraum zumindest bereichsweise ein Verankerungsmittel zum Verankern des in den Hohlraum einführbaren Verbindungselementes aufweist, wobei die Anschlussvorrichtung an einer Arbeitsfuge, z. B. an der Schalung, des ersten Bauteils, z. B. mittels Nägel, angeordnet wird. Anschliessend wird das erste Bauteil erstellt, beispielsweise gegossen, wobei der Hohlkörper in dem ersten Bauteil eingebettet wird. Dann wird das Verbindungselement in den Hohlraum des Hohlkörpers eingeführt, wobei das Verbindungselement anschliessend von dem Verankerungsmittel kraftschlüssig in der Anschlussvorrichtung gehalten ist. Danach wird das zweite Bauteil erstellt, beispielsweise gegossen, wobei das bereits kraftschlüssig im ersten Bauteil verankerte Verbindungselement in dem zweiten Bauteil eingebettet wird und somit das zweite Bauteil mit dem ersten Bauteil kraftschlüssig verbunden ist.

Das Verbindungselement wird beispielsweise manuell, z. B. direkt von Hand oder mittels eines Hammers, in den Hohlraum des Hohlkörpers eingeführt. Alternativ wird das Verbindungselement maschinell, z. B. mit einem Bohrhammer, eventuell in Kombination mit einem entsprechenden Setzwerkzeug, in den Hohlraum des Hohlkörpers eingeführt. Ist das Verankerungsmittel eine aushärtbare Masse kann die zum Einführen des Verbindungselementes erforderliche Energie zur Aktivierung, z. B. zur Durchmischung der aushärtbaren Masse verwendet werden.

Die Erfindung wird nachstehend anhand von Ausführungsbeispielen näher erläutert. Es zeigen:
- Fig. 1: Ein erstes Ausführungsbeispiel einer Anschlussvorrichtung im eingebauten Zustand in einem Teilschnitt;
- Fig. 2: ein zweites Ausführungsbeispiel einer Anschlussvorrichtung in einer Ansicht;
- Fig. 3: die in Fig. 2 gezeigte Anschlussvorrichtung in einem Schnitt entlang der Linie III-III in der Fig. 2; und
- Fig. 4: ein drittes Ausführungsbeispiel einer Anschlussvorrichtung in einem Teilschnitt.

Grundsätzlich sind in den Figuren gleiche Teile mit den gleichen Bezugszeichen versehen.

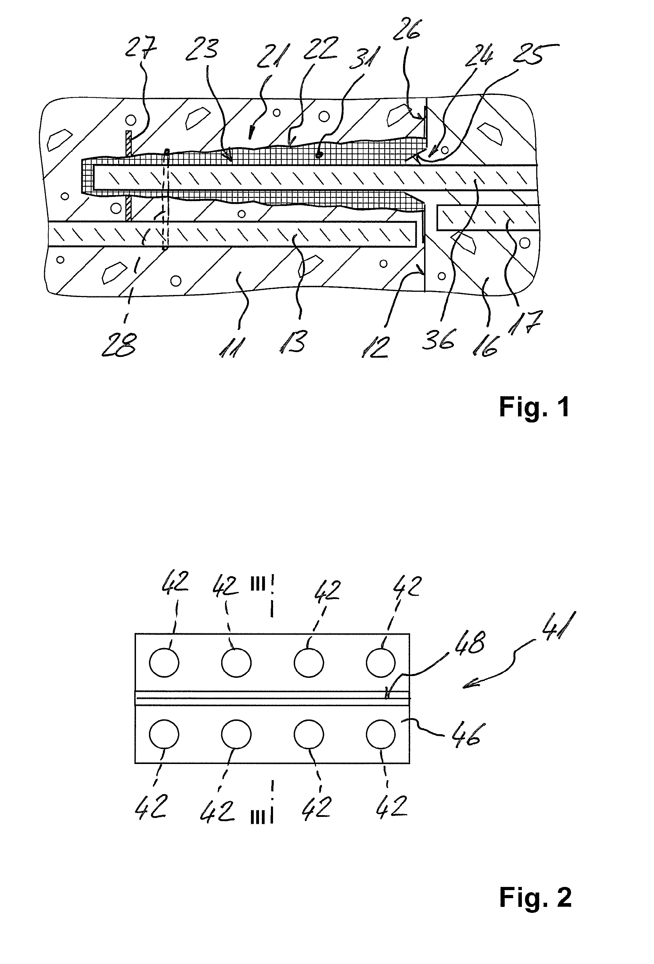

Die in der Figur 1 dargestellte Anschlussvorrichtung 21 dient dem kraftschlüssigen Verbinden eines ersten Bauteils 11 mit einem zweiten Bauteil 16, das in einem zeitlichen Abstand zum ersten Bauteil 11 erstellt wird. Zwischen den jeweils gegossenen Bauteilen 11 und 16 ist eine Arbeitsfuge 12 vorgesehen.

Die Anschlussvorrichtung 21 umfasst einen einen Hohlraum 23 ausbildenden Hohlkörper 22, der eine Einführöffnung 24 zum Einführen eines stabförmigen Verbindungselementes 36 sowie im Hohlraum 23 ein Verankerungsmittel 31 in Form einer aushärtbaren Masse zum Verankern des in den Hohlraum 23 eingeführten Verbindungselementes 36 aufweist. Das Verankerungsmittel 31 und der Hohlkörper 22 bilden zusammen eine vorkonfektionierte Einheit aus. Der Hohlkörper 22 ist konisch ausgebildet und verjüngt sich ausgehend von der Einführöffnung 24. Die Aussenseite und Innenseite des Hohlkörpers 22 verlaufen in diesem Beispiel leicht wellenförmig. Die Einführöffnung 24 ist mit einem Verschlusselement 25 verschlossen, das von einer von dem Verbindungselement 36 durchstossbaren Membrane gebildet ist. Im Bereich der Einführöffnung 24 ist der Hohlkörper 22 mit einem nach radial aussen abragenden Befestigungsflansch 26 versehen, der eine einfache Festlegung der Anschlussvorrichtung 21 an einer Schalung ermöglicht. Weiter ist beabstandet zur Einführöffnung 24 des Hohlkörpers 22 an dessen Aussenkontur ein Positionierelement 27 für die Anordnung des Hohlkörpers 22 im ersten Bauteil vorgesehen. Wenn der Hohlkörper 22 beispielsweise mit einem Bindedraht 28 an der Bewehrung 13 fixiert wird, kommt das hier als umlaufender Ring ausgebildete Positionierelement 27 mit einem Abschnitt mit der Bewehrung 13 bereichsweise in Anlage.

Nachfolgend wird anhand der Figur 1 das Verfahren zur Erstellung eines Anschlusses zum kraftschlüssigen Verbinden des ersten Bauteils 11 mit dem zweiten Bauteil 16 dargelegt. Zuerst wird die Schalung für das erste Bauteil 11 erstellt und die Bewehrung 13 für das erste Bauteil 11 verlegt. Dann wird der Hohlkörper 22 an der Schalung, welche die Arbeitsfuge bildet z. B. mit Nägeln festgelegt. Anschliessend wird das erste Bauteil 11 gegossen, wobei die Anschlussvorrichtung 21 in das erste Bauteil 11 eingebettet wird.

Vor der Erstellung des zweiten Bauteils 16 wird das Verbindungselement 36, hier ein Bewehrungseisen, durch das Verschlusselement 25 in den mit dem Verankerungsmittel 31 befüllten Hohlraum 23 eingeführt. An dem Verbindungselement 36 können hier nicht dargestellte Führungselemente vorgesehen werden, welche eine korrekte Ausrichtung des eingeführten Verbindungselementes 36 im Hohlraum 23 des Hohlkörpers 22 sicherstellen. Derartige Führungselemente können anstelle an dem Verbindungselement oder ergänzend auch im Verschlusselement für den Hohlraum oder im Hohlraum selbst angeordnet sein. Beim Einführen des Verbindungselementes 36 wird der Aushärtvorgang der als Verankerungsmittel 31 dienenden aushärtbaren Masse gestartet. Nach dem Aushärten der aushärtbaren Masse ist das Verbindungselement 36 kraftschlüssig in der Anschlussvorrichtung 21 beziehungsweise im ersten Bauteil 11 verankert.

Dann wird die Schalung für das zweite Bauteil 16 erstellt und dessen Bewehrung 17 verlegt. Nach Abschluss dieser Arbeiten wird das zweite Bauteil 16 gegossen, wobei das im ersten Bauteil 11 verankerte Verbindungselement 36 zur kraftschlüssigen Verbindung zwischen dem ersten Bauteil 11 und dem zweiten Bauteil 16 im zweiten Bauteil 16 eingebettet wird.

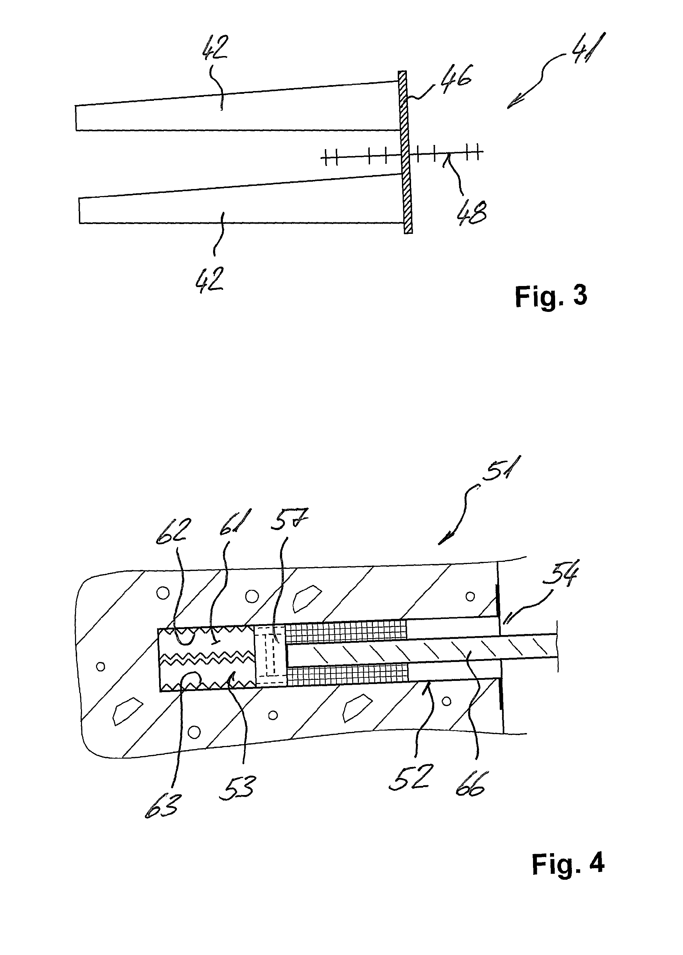

Die in den Figuren 2 und 3 dargestellte Anschlussvorrichtung 41 weist mehrere Hohlkörper 42 auf, die an einem Trägerelement 46 angeordnet sind. Die Hohlkörper 42 sind wie die zuvor beschriebenen Hohlkörper 22 ebenfalls konisch ausgebildet, aber weisen im Gegensatz dazu eine gerade verlaufende Mantelfläche auf. In Längserstreckung des Trägerelementes 46 ist zwischen den Hohlkörpern 42 ein Fugenabdichtelement 48 in Form eines Fugenbandes vorgesehen, das im eingegossenen Zustand einerseits in dem ersten Bauteil 11 und andererseits in dem zweiten Bauteil 16 eingebettet ist. Das Fugenabdichtelement 48 dichtet die Arbeitsfuge 12 zwischen den Bauteilen 11 und 16 vor eindringendem Wasser ab.

Bei der Anschlussvorrichtung 51, wie sie in der Figur 4 gezeigt ist, ist das in dem Hohlraum 53 des kreiszylindrischen Hohlkörpers 52 angeordnete Verankerungsmittel 61 von einer mehrkomponentigen aushärtbaren Masse gebildet, deren Komponenten in zwei separaten Behältnissen 62 und 63 im Hohlraum 53 des Hohlkörpers 52 gelagert sind. Zwischen der Einführöffnung 54 des Hohlkörpers 52 und der aushärtbaren Masse als Verankerungsmittel 61 ist ein Mischelement 57 verschiebbar im Hohlraum 53 des Hohlkörpers 52 angeordnet.

Beim Einführen des Verbindungselementes 66 wird das Mischelement 57 in Richtung der aushärtbaren Masse als Verankerungsmittel 61 versetzt, wobei die in den Behältnissen 62 und 63 befindlichen Komponenten durch das Mischelement 57 gepresst sowie darin gemischt werden. Die vermischte aushärtbare Masse tritt rückseitig des Mischelementes 57 aus, wobei das Verbindungselement 66 von dieser bereichsweise umgeben wird und nach dem Aushärten der aushärtbaren Masse kraftschlüssig in der Anschlussvorrichtung 51 verankert ist.

## Patentansprüche

1. Anschlussvorrichtung zum kraftschlüssigen Verbinden eines ersten Bauteils (11) mit einem zweiten Bauteil (16), wobei die Anschlussvorrichtung (21; 41; 51) einen einen Hohlraum (23; 53) ausbildenden Hohlkörper (22; 42; 52) mit einer Einführöffnung (24; 54) zum Einführen eines Verbindungselementes (36; 66) umfasst, **dadurch**
**gekennzeichnet, dass**
im Hohlraum (23; 53) des Hohlkörpers (22; 42; 52) zumindest bereichsweise ein Verankerungsmittel (31; 61) zum Verankern des in den Hohlraum (23; 53) eingeführten Verbindungselementes (36; 66) vorgesehen ist, wobei das Verankerungsmittel (31; 61) und der Hohlkörper (22; 42; 52) zusammen eine vorkonfektionierte Einheit ausbilden.

2. Anschlussvorrichtung nach Anspruch 1, **dadurch gekennzeichnet, dass** das Verankerungsmittel (31; 61) eine aushärtbare Masse umfasst.

3. Anschlussvorrichtung nach Anspruch 2, **dadurch gekennzeichnet, dass** die aushärtbare Masse mehrere Komponenten umfasst.

4. Anschlussvorrichtung nach Anspruch 2 oder 3, **dadurch gekennzeichnet, dass** ein Mischelement (57) im Hohlraum (53) des Hohlkörpers (52) angeordnet ist.

5. Anschlussvorrichtung nach Anspruch 4, **dadurch gekennzeichnet, dass** das Mischelement (57) verschiebbar im Hohlraum (53) des Hohlkörpers (52) angeordnet ist.

6. Anschlussvorrichtung nach einem der Ansprüche 1 bis 5, **dadurch gekennzeichnet, dass** die Einführöffnung (24) mit einem Verschlusselement (25) verschlossen ist.

7. Anschlussvorrichtung nach einem der Ansprüche 1 bis 6, **dadurch gekennzeichnet, dass** ein Positionierelement (27) für die Anordnung des Hohlkörpers (22) im ersten Bauteil (11) vorgesehen ist, wobei das Positionierelement (27) beabstandet zur Einführöffnung (24) des Hohlkörpers (22) an diesem aussenseitig angeordnet ist.

8. Anschlussvorrichtung nach einem der Ansprüche 1 bis 7, **dadurch gekennzeichnet, dass** mehrere Hohlkörper (42) an einem Trägerelement (46) angeordnet sind.

9. Anschlussvorrichtung nach Anspruch 8, **dadurch gekennzeichnet, dass** zwischen den Hohlkörpern (42) ein Fugenabdichtelement (48) vorgesehen ist.

10. Verfahren zur Erstellung eines Anschlusses zum kraftschlüssigen Verbinden eines ersten Bauteils (11) mit einem zweiten Bauteil (16), wobei
eine Anschlussvorrichtung (21; 41; 51) mit einem einen Hohlraum (23; 53) ausbildenden Hohlkörper (22; 42; 52), der eine Einführöffnung (24; 54) zum Einführen eines Verbindungselementes (36; 66) aufweist und der in seinem Hohlraum (23; 53) zumindest bereichsweise ein Verankerungsmittel (31; 61) zum Verankern des in den Hohlraum (23; 53) eingeführten Verbindungselementes (36; 66) aufweist, an einer Arbeitsfuge (12) des ersten Bauteils (11) angeordnet wird,
anschliessend das erste Bauteil (11) erstellt wird, und
dann das Verbindungselement (36; 66) in den Hohlraum (23; 53) des Hohlkörpers (22; 42; 52) eingeführt wird, wobei das Verbindungselement (36; 66) anschliessend von dem Verankerungsmittel (31; 61) kraftschlüssig in der Anschlussvorrichtung (21; 41; 51) gehalten ist.
